Europäisches Patentamt

European Patent Office

Office européen des brevets

(19)

(11) Veröffentlichungsnummer: **0 223 048**
**B1**

(12) # EUROPÄISCHE PATENTSCHRIFT

(45) Veröffentlichungstag der Patentschrift:
**24.01.90**

(21) Anmeldenummer: **86114027.5**

(22) Anmeldetag: **09.10.86**

(51) Int. Cl.⁴: **G01F 13/00**

(54) **Messanordnung zum Messen der Veränderung einer Flüssigkeitsmenge, insbesondere der Ölmenge in einer Brennkraftmaschine.**

(30) Priorität: **18.10.85 DE 3537192**

(43) Veröffentlichungstag der Anmeldung:
**27.05.87 Patentblatt 87/22**

(45) Bekanntmachung des Hinweises auf die Patenterteilung:
**24.01.90 Patentblatt 90/4**

(84) Benannte Vertragsstaaten:
**DE FR GB IT SE**

(56) Entgegenhaltungen:
**DE-A- 2 753 110**
**DE-B- 1 498 314**
**US-A- 4 264 788**

(73) Patentinhaber: **Gervé, Andreas, Dr.-Ing.,**
**Kriegsstrasse 180, D-7500 Karlsruhe(DE)**

(72) Erfinder: **Gervé, Andreas, Dr.-Ing., Kriegsstrasse 180,**
**D-7500 Karlsruhe(DE)**

(74) Vertreter: **Liesegang, Roland, Dr.-Ing., FORRESTER &**
**BOEHMERT Widenmayerstrasse 4 Postfach 22 01 37,**
**D-8000 München 22(DE)**

**Beschreibung**

Die Erfindung betrifft eine Meßanordnung zum Messen der Veränderung einer Flüssigkeitsmenge, insbesondere der Ölmenge in einer Brennkraftmaschine, in einem die Flüssigkeit aufnehmenden Speicherraum, insbesondere einer Ölwanne, mit den Merkmalen des Oberbegriffs des Patentanspruchs 1 (DE-B 1 498 314).

Bei einer Meßanordnung dieser Art ist die Verwendung eines photoelektrischen Flüssigkeitsstandmelders zum Messen des Flüssigkeitsniveaus bekannt (DE-A1 2 753 110).

Eine andere bekannte Meßanordnung für Ölverbrauchsmessungen beruht auf der Anwendung eines Radionuklid-Meßverfahrens (DE-Z Motortechnische Zeitschrift 41 (1980), S. 317 ff, Aufsatz von G. Fritzsche und A. Gervé "Die Verfahren der Radionuklidtechnik für Ölverbrauchsmessungen"). Bei diesem Verfahren wird das Öl radioaktiv markiert. Am Auspuffsystem werden die radioaktiven Atome im Abgas in Form von Proben entnommen. Die Höhe der Strahlung ist ein Maß für das über den Auspuff entweichende Öl. Dieses Verfahren ermöglicht eine Betriebsmessung bei laufender Brennkraftmaschine, so daß der Ölverbrauch abhängig von den Betriebsbedingungen genau gemessen werden kann. Jedoch ist dieses Verfahren sehr aufwendig und erfordert zusätzlichen Aufwand zur Beachtung der Strahlenschutzvorschriften.

Bei einem anderen Verfahren zur Messung des Ölverbrauchs wird zunächst das eingefüllte Öl über eine Saugvorrichtung aus der Ölwanne abgesaugt, bis Luft gesaugt wird. Diese Ölmenge wird gewogen und dann wieder eingefüllt. Nach dem Laufen der Brennkraftmaschine unter definierten Bedingungen wird das Öl erneut abgesaugt, bis Luft gesaugt wird. Wieder wird die abgesaugte Ölmenge gewogen. Da die Mündung der Absaugvorrichtung stets auf gleichem Niveau gehalten wird, kann aus der Differenz des ursprünglichen und des nach dem Motorlauf ermittelten Ölgewichtes der Ölverbrauch bestimmt werden. Statt eines Absaugens aus der Ölwanne kann Öl auch aus einem motorexternen Ausgleichsgefäß abgesaugt werden. Dieses Verfahren erlaubt keine Betriebsmessung bei laufender Brennkraftmaschine; es liefert keine genügend genauen Ergebnisse.

Bei einem weiteren Verfahren zur Ölverbrauchsmessung wird die Ölwanne vom Motor entfernt und durch eine davon getrennte Ölwanne ersetzt. Diese wird bei laufendem Motor mitsamt ihres Ölinhaltes gewogen. Die Messung kann erst erfolgen, wenn der Motor sich an einem bestimmten Betriebspunkt stabilisiert hat. Die Steigung der Gewichtsfunktion über der Zeit ist ein Maß für die Änderung der Ölmenge mit der Zeit und damit für den Ölverbrauch. Nachteilig ist hierbei, daß der Ölverbrauch nicht im Originalzustand sondern erst nach Trennung der Ölwanne bzw. Ersatz der Ölwanne durch eine getrennt wiegbare Ölwanne gemessen werden kann. Dies ist umständlich und führt wiederum zu Ungenauigkeiten.

Schließlich ist die sogenannte "Abtropfmethode" zum Messen des Ölverbrauchs bekannt. Zum Start der Ölverbrauchsmessung nach dieser Methode läßt man den Motor auf einen bestimmten Betriebspunkt hochlaufen, bis Stabilität hinsichtlich Temperatur und Viskosität des Öles erreicht ist. Dann hält man den Motor an und läßt das Öl über eine bestimmte Zeitspanne auslaufen, wiegt die ausgelaufene Ölmenge ab und füllt dieses ausgelaufene Öl insgesamt wieder ein.

Für den Entwickler einer Brennkraftmaschine sind die beschriebenen bekannten Verfahren aus den angegebenen Gründen insgesamt noch nicht zufriedenstellend. Er wünscht sich eine ausreichend genaue Ölverbrauchsmessung, die z. B. bei einem Motor mit 100 KW Leistung auf einige g/h genau während einiger Stunden Prüflauf den Ölverbrauch in Zuordnung zu einem beliebigen Betriebspunkt des Motors möglichst unter Vermeidung einer konstruktiven Änderung am Motor ermitteln läßt.

Das genaue Erfassen eines Flüssigkeitsverbrauches ist aber nicht nur in Verbindung mit einer Brennkraftmaschine von Bedeutung. Beispielsweise stellt sich auch in der Verfahrenstechnik die Aufgabe einer genauen Flüssigkeitsverbrauchsmessung dort, wo es auf das genaue Halten des Standes einer Flüssigkeit ankommt. Eine genaue Flüssigkeitsstandmessung bildet die Voraussetzung für eine genaue Regelung des Flüssigkeitsstandes überall dort, wo Flüssigkeiten verbraucht und eine genaue Regelung der Flüssigkeitsnachfüllung erforderlich ist.

Demgemäß liegt der Erfindung die Aufgabe zugrunde, eine Meßanordnung zum Messen der Veränderung einer Flüssigkeitsmenge anzugeben, die ein hochgenaues Messen unter realistischen Betriebsbedingungen des Flüssigkeitsverbrauchs mit vergleichsweise geringem Aufwand und unter Vermeidung einer eingreifenden konstruktiven Abwandlung der die Flüssigkeit verbrauchenden technischen Anlage, wie einer Brennkraftmaschine, ermöglicht.

Zur Lösung dieser Aufgabe sind bei einer Meßanordnung der im Oberbegriff des Patentanspruchs 1 beschriebenen Art gemäß der Erfindung die kennzeichnenden Merkmale des Patentanspruchs 1 vorgesehen.

Die Meßanordnung nach der Erfindung ermöglicht eine genaue Ölverbrauchsmessung im Betrieb bei laufendem Motor, wobei eine konstruktive Abwandlung des Motors vermieden ist, die Messung also an einem Serienmotor durchgeführt werden kann. Dadurch, daß die Temperatur in der Flüssigkeitsausgleichsleitung und in der Meßkammer auf konstanter Temperatur gehalten wird, lassen sich Ungenauigkeiten aufgrund veränderlicher Temperatur der Flüssigkeit in der Meßkammer vermeiden. Dies ermöglicht die gewünschte Genauigkeit der Messung. Somit können die oben geschilderten Anforderungen eines Motorentwicklers mit der Meßanordnung gemäß der Erfindung sämtlich erfüllt werden.

Als für die Zwecke der Erfindung besonders geeignet hat sich eine Niveaumeßvorrichtung mit einem oberhalb des Flüssigkeitsniveaus angeordneten Sensor erwiesen, der ein Schallsignal abgibt und durch Laufzeitmessung des von dem Flüssigkeitsniveau reflektierten Schallsignals ein dafür repräsentatives Ausgangssignal abgibt. Ein solcher Sensor ist bekannt (US-A 4 264 788) und im Handel erhältlich (Luftschall-Abstandsmeßgerät LAM 80 der Firma Krautkrämer).

Zweckmäßig ist eine Auswertevorrichtung vorgesehen, welche die von der Niveaumeßvorrichtung abgegebenen Niveaumeßwerte abhängig von der Temperatur im Raum oberhalb des Flüssigkeitsspiegels in der Meßkammer und von der Flüssigkeitstemperatur in der Flüssigkeitsausgleichsleitung korrigiert. Hierbei ist in Verbindung mit dem ein Schallsignal abgebenden Sensor vorteilhaft, wenn ein Gasthermometer zum Messen der Temperatur im Raum oberhalb des Flüssigkeitsniveaus der Meßkammer vorgesehen ist, mit dessen Ausgangssignal das Niveaumeßsignal unter Berücksichtigung des Zusammenhangs zwischen Schallfortpflanzung und Temperatur des schallübertragenden Mediums unmittelbar korrigiert wird.

Um die Flüssigkeitstemperatur in der Flüssigkeitsausgleichsleitung bzw. der Meßkammer konstant halten zu können, ist bei einer konkreten Ausgestaltung der Erfindung vorteilhaft vorgesehen, daß ein Flüssigkeitsthermometer zum Messen der Temperatur der Flüssigkeit in der Flüssigkeitsausgleichsleitung in oder nahe deren Mündung in die Meßkammer oder unterhalb des Flüssigkeitsspiegels in dieser selbst vorgesehen ist, und daß das Ausgangssignal des Flüssigkeitsthermometers einem mit der Auswertevorrichtung verbundenen Regler zum Beeinflussen der Heizvorrichtung zugeführt wird.

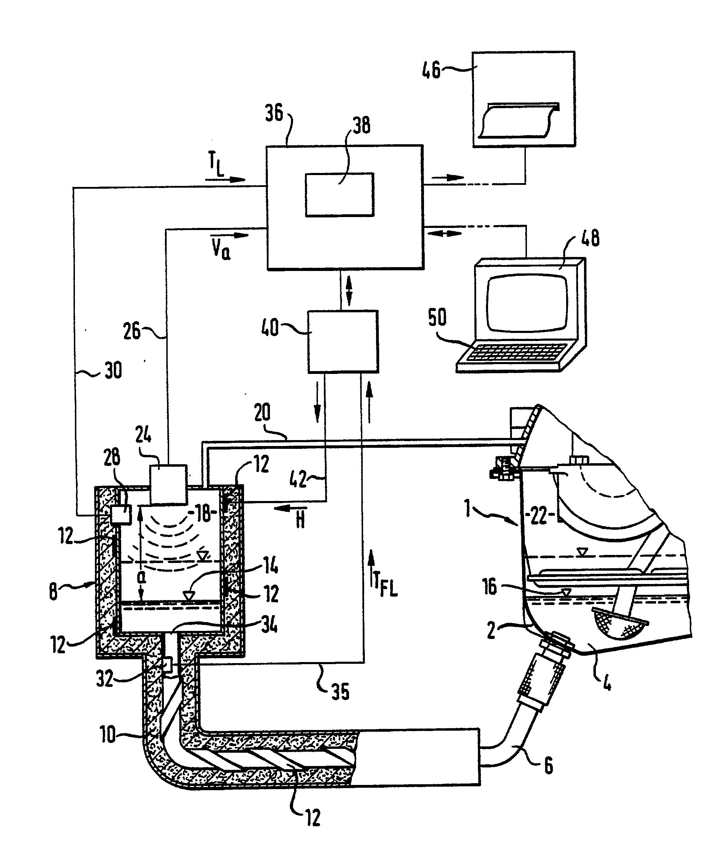

Die Erfindung ist im folgenden anhand einer schematischen Zeichnung an einem Ausführungsbeispiel mit weiteren Einzelheiten näher erläutert. Die einzige Figur zeigt eine teilweise geschnittene Darstellung der konventionellen Ölwanne einer Brennkraftmaschine mit angeschlossener Meßanordnung nach der Erfindung.

In der einzigen Figur ist eine Meßanordnung zum Messen des Ölverbrauchs einer Brennkraftmaschine I mit herkömmlicher Ölwanne 2 gezeigt. Der Sumpf 4 der Ölwanne 2 ist über eine Flüssigkeitsausgleichsleitung 6 mit einer etwa auf gleicher Höhe wie die Ölwanne befindlichen Meßkammer 8 verbunden. Die Meßkammer 8 und der zu ihr hinführende Abschnitt der Flüssigkeitsausgleichsleitung 6 sind mit einer wärmeisolierenden Umhüllung I0 versehen. Innerhalb dieser Umhüllung I0 ist sowohl die Meßkammer 8 als auch die Flüssigkeitsausgleichsleitung 6 spiralförmig von einer Heizvorrichtung I2 umgeben. Das Öl steigt in der Meßkammer 8 nach dem Prinzip der kommunizierenden Röhren auf einen Ölspiegel I4 entsprechend dem Ölspiegel I6 in der Ölwanne an. Die Ölspiegel I4,I6 stimmen aufgrund der unterschiedlichen Temperaturen in der Meßkammer 8 und der Ölwanne 2 nicht notwendig überein.

In dem Raum I8 oberhalb des Ölspiegels I4 der Meßkammer 8 befindet sich Luft. Da der Raum I8 über eine Druckausgleichsleitung 20 mit dem Raum 22 oberhalb des Ölspiegels I6 kommuniziert, sind die Drücke in den Räumen I8, 22 ausgeglichen. In der Deckwand der Meßkammer 8 ist eine Niveaumeßvorrichtung in Gestalt eines Niveausensors 24 vorgesehen, der ein Schallsignal abgibt und durch Laufzeitmessung des von dem Flüssigkeitsspiegel I4 reflektierten Schallsignales eine entsprechende Spannung $V_a$ über die Signalflußleitung 26 abgibt. In der Seitenwand der Meßkammer 8 ist ein Gasthermometer, z. B. in Form eines herkömmlichen Eisen-Konstantan-Thermoelementes 28 vorgesehen, daß zur Messung der Temperatur der Luft im Raum I8 dient und als Ausgangssignal $T_L$ eine für die Temperatur $t_L$ im Raum I8 repräsentative Spannung über die Signalflußleitung 30 abgibt. Ein Flüssigkeitsthermometer 32, das ebenfalls als herkömmliches Thermoelement ausgebildet sein kann, ist in die Flüssigkeitsausgleichsleitung 6 in der Nähe von deren Mündung 34 in die Meßkammer 8 eingebaut und gibt ein für die Temperatur $t_{Fl}$ repräsentatives Spannungssignal $T_{Fl}$ über eine Signalflußleitung 35 ab. Die Signalflußleitungen 26 und 30 bilden zwei Eingänge einer Auswertvorrichtung 36, die einen Rechner 38 enthält. Ferner ist an die Auswertvorrichtung 36 ein Regler 40 angeschlossen, der als einen Eingang die Signalflußleitung 35 hat. Der Regler 40 kann mit einem Regelsignal H über eine Signalflußleitung 42 auf die Heizvorrichtung I2 einwirken.

An die Auswertvorrichtung ist ein Drucker 46 und ein Grafikbildschirm 48 mit Eingabetastenfeld 50 angeschlossen.

Die beschriebene Meßanordnung arbeitet wie folgt:

Das Öl fließt über die auf konstanter Temperatur gehaltene Flüssigkeitsausgleichsleitung 6 solange von der Ölwanne 2 in die auf gleicher Temperatur wie die Flüssigkeitsausgleichsleitung 6 gehaltene Meßkammer 8 oder umgekehrt, bis sich die beiden Ölsäulen in der Meßkammer 8 und in der Ölwanne 2 im Gleichgewicht befinden. Die Höhe der Ölsäule in der Meßkammer 8 repräsentiert die Masse des Öles in der Ölwanne. Gleiches Niveau stellt sich dann ein, wenn die beiden Ölsäulen gleiche Temperatur haben und der Druck über den Ölspiegeln gleich hoch ist. Ändert sich in der Ölwanne 2 die Öltemperatur, so ändert sich aufgrund der Wärmeausdehnung das Ölvolumen im Motor, und die beiden Ölspiegel I4, I6 befinden sich nicht mehr auf gleicher Höhe. Da das Gewicht der beiden Ölsäulen sich nicht verändert hat, repräsentiert das Ölniveau I4 in der Meßkammer 8 unverändert die richtige Masse der eingefüllten Ölmenge in der Ölwanne 2.

Bei laufender Maschine und konstanten Betriebsbedingungen, welche durch die Drehzahl, die Last und die Temperatur gekennzeichnet sind, befindet sich nur noch ein Teil der Gesamtmenge des Öls in der Ölwanne, während der restliche Teil des Öles an anderen Stellen der Brennkraftmaschine verteilt ist. Nachwievor repräsentiert jedoch das Ölniveau I4 in der Meßkammer 8 die in der Ölwanne verbliebene Ölmenge.

Zeitliche Änderungen dieser Ölmenge durch Ölverbrauch werden durch ein Absinken des Ölniveaus I4 in der Meßkammer 8 wie folgt erfaßt: Mittels Laufzeitmessung des vom Niveausensor 24 abgegebenen Schallsignals über die Strecke a bis zum Ölniveau l4 in der Meßkammer 8 und Messen des reflektierten Schallsignals wird ein Maß für die Höhe des Ölniveaus l4 gewonnen. Da die Schallgeschwindigkeit abhängig von der Dichte des Übertragungsmediums (Luft) und von dessen Temperatur ist, wird die Temperatur $t_L$ mittels des Gasthermometers 28 erfaßt. Die Ausgangssignale des Niveausensors 24 und des Gasthermometers 28 werden in die Auswertvorrichtung 36 eingegeben. Gleichzeitig wird die Temperatur der Flüssigkeit in der Ausgleichsleitung 6 nahe der Mündung 34 der Flüssigkeitsausgleichsleitung 6 in die Meßkammer 8 erfaßt und an den Regler 40 in Form eines Temperatursignals $T_{Fl}$ gemeldet. Der Regler, der im Datenaustausch mit der Auswertvorrichtung 36 steht, beeinflußt dann unter Berücksichtigung eines von der Auswertvorrichtung 36 an den Regler 40 übermittelten Korrektursignales, in welchem das Niveausignal abhängig von der jeweils herrschenden Temperatur im Raum l8 der Meßkammer 8 korrigiert ist, die Heizvorrichtung l2 über ein Reglerausgangssignal H so, daß die Temperatur in der Meßkammer und in der Ausgleichsleitung 6 unabhängig von der Temperatur in der Ölwanne 2 auf einem vorgegebenen konstanten Sollwert gehalten wird.

Der Rechner 38 der Auswertevorrichtung 36 hat dabei die folgenden Aufgaben:

- er wandelt das vom Niveausensor 24 erhaltene Spannungssignal $V_a$ in ein für den Abstand a repräsentatives Abstandssignal um;
- er berücksichtigt dabei die gewöhnlich nichtlineare Funktion zwischen dem Ölwannenvolumen und dem Ölniveau in der Ölwanne;
- er berücksichtigt die jeweils verwendete Ölsorte durch Multiplikation mit dem jeweiligen spezifischen Gewicht des verwendeten Öles;
- er scheidet Niveaumeßwerte aus, die nicht ölverbrauchsbedingt sein können, weil die Niveauänderung pro Zeiteinheit zu schnell vonstatten geht, als dies durch einen Ölverbrauch gerechtfertigt sein könnte;
- er nimmt über kurze Zeitabschnitte, z. B. eine Sekunde bis eine Minute, die Verteilung des Ölniveaus über der Zeit auf und bildet einen Mittelwert unter Berücksichtigung eines statistischen Streumaßes;
- er stellt an seinem Ausgang die verbrauchte Ölmasse bezogen auf den Startzeitpunkt der Messung oder die zum Abfragezeitpunkt noch vorhandene Restmasse des Öles bereit und übermittelt diese Ausgabe wahlweise oder gleichzeitig an den Drucker 46 und den Bildschirm 48.

Die Heizvorrichtung hat bei der Meßanordnung nach der Erfindung zweierlei Aufgaben: Zum einen vermeidet sie Meßfehler aufgrund von Temperaturunterschieden in der Ausgleichsleitung 6 und der Meßkammer 8. Zum anderen erlaubt sie das Einstellen der Temperatur des Öles in der Ausgleichsleitung 6 und in der Meßkammer 8 auf einen Wert mit erwünschter kleiner Viskosität, so daß die Reibung in der Flüssigkeitsausgleichsleitung 6 ausreichend klein für einen schnellen Ausgleich eines Niveauunterschiedes zwischen der Meßkammer 8 und der Ölwanne 2 ist.

**Patentansprüche**

1. Meßanordnung zum Messen der Veränderung einer Flüssigkeitsmenge, insbesondere der Ölmenge in einer Brennkraftmaschine (1), in einem die Flüssigkeit aufnehmenden Speicherraum (2), insbesondere einer Ölwanne, mit einer Meßkammer (8), die mit dem Speicherraum (2) über eine Flüssigkeitsausgleichsleitung (6) in Verbindung steht, und einer Niveaumeßvorrichtung (24) basierend auf der Messung der Reflexion oder Absorption von elektromagnetischen Wellen oder Schallwellen zum Erfassen des Flüssigkeitsniveaus (14) in der Meßkammer (8), gekennzeichnet durch eine die Räume (18, 22) über dem Flüssigkeitsniveau (16, 14) im Speicherraum (22) und in der Meßkammer (8) verbindende Druckausgleichsleitung (20) und eine die Flüssigkeitsausgleichsleitung (6) und die Meßkammer (8) auf konstanter Temperatur haltende Heizvorrichtung (12).

2. Anordnung nach Anspruch 1, dadurch gekennzeichnet, daß die Niveaumeßvorrichtung einen oberhalb des Flüssigkeitsniveaus (l4) angeordneten Niveausensor (24) aufweist, der ein Schallsignal abgibt und durch Laufzeitmessung des von dem Flüssigkeitsniveau (l4) reflektierten Schallsignales ein dafür repräsentatives Ausgangssignal ($V_a$) abgibt.

3. Anordnung nach Anspruch l oder 2, gekennzeichnet durch eine Auswertvorrichtung (36), welche die von der Niveaumeßvorrichtung (24) abgegebenen Niveaumeßwerte ($V_a$) abhängig von der Temperatur im Raum (l8) oberhalb des Flüssigkeitsspiegels (l4) in der Meßkammer (8) und von der Flüssigkeitstemperatur in der Flüssigkeitsausgleichsleitung (6) korrigiert.

4. Anordnung nach Anspruch 3, dadurch gekennzeichnet, daß ein Gasthermometer (28) zum Messen der Temperatur im Raum oberhalb des Flüssigkeitsniveaus (l4) der Meßkammer (8) vorgesehen ist, mit dessen Ausgangssignal das Niveaumeßsignal unter Berücksichtigung des Zusammenhangs zwischen Schallfortpflanzung und Temperatur des schallübertragenden Mediums unmittelbar korrigiert wird.

5. Anordnung nach Anspruch 3 oder 4, dadurch gekennzeichnet, daß ein Flüssigkeitsthermometer (32) zum Messen der Temperatur der Flüssigkeit in der Flüssigkeitsausgleichsleitung (6) in oder nahe deren Mündung (34) in die Meßkammer (8) oder unterhalb des Flüssigkeitsspiegels (l4) in dieser selbst vorgesehen ist, und daß das Ausgangssignal ($T_{F1}$) des Flüssigkeitsthermometers (32) einem mit der Auswertvorrichtung (36) verbundenen Regler (40) zum Beeinflussen der Heizvorrichtung (l2) zugeführt wird.

6. Anordnung nach einem der Ansprüche 2 bis 5, dadurch gekennzeichnet, daß die Auswertvorrichtung (36) einen Rechner (38) umfaßt.

## Claims

1. Measuring arrangement for measuring the variation in a volume of liquid, in particular the volume of oil in an internal combustion engine (1), in a storage space (2) containing the liquid, in particular an oil sump, comprising a measuring chamber (8), which is connected to the storage space (2) via a liquid equalizing pipe (6), and a level measuring device (24), based on the measurement of the reflection or absorption of electromagnetic waves or sound waves for determining the liquid level (14) in the measuring chamber (8), characterised by a pressure equalizing line (20), which connects the spaces (18, 22) above the liquid level (16, 14) in the storage space (22) and in the measuring chamber (8), and a heating device (12), which keeps the liquid equalizing pipe (6) and the measuring chamber (8) at a constant temperature.

2. Arrangement according to claim 1, characterised in that the level measuring device comprises a level sensor (24), which is arranged above the liquid level (14), delivers an acoustic signal and, by measuring the propagation time of the acoustic signal reflected from the liquid level (14), delivers an output signal ($V_a$) which is representative of this.

3. Arrangement according to claim 1 or 2, characterised by an evaluation device (36), which corrects the measured level values ($V_a$) delivered by the level measuring device (24) in accordance with the temperature in the space (18) above the liquid level (14) in the measuring chamber (8) and with the liquid temperature in the liquid equalizing pipe (6).

4. Arrangement according to claim 3, characterised in that a gas thermometer (28) is provided to measure the temperature in the space above the liquid level (14) in the measuring chamber (8), the output signal of which enables the measured level signal to be immediately corrected, taking account of the connection between the sound propagation and the temperature of the sound-transmitting medium.

5. Arrangement according to claim 3 or 4, characterised in that a liquid thermometer (32) is provided in the liquid equalizing pipe (6) to measure the temperature of the liquid in the latter in or near its opening (34) into the measuring chamber (8) or below the liquid level (14), and that the output signal ($T_{F1}$) of the liquid thermometer (32) is fed to a control unit (40), which is connected to the evaluation device (36), for influencing the heating device (12).

6. Arrangement according to one of claims 2 to 5, characterised in that the evaluation device (36) comprises a computer (38).

## Revendications

1. Dispositif de mesure du changement de la quantité d'un liquide, en particulier de la quantité d'huile dans un moteur thermique (1), dans un volume de retenue du liquide (2), en particulier un carter à huile, à l'aide d'une chambre de mesure (8), qui est en relation avec le volume de retenue (2) au moyen d'un conduit de communication de liquide (6) et qui comprend un dispositif de mesure du niveau (24) basé sur la mesure de la réflexion ou de l'absorption d'ondes électromagnétiques ou d'ondes sonores destiné à évaluer le niveau du liquide (14) dans la chambre de mesure (8), caractérisé en ce que

un conduit de compensation de pression (20) relie les espaces (18, 22) compris au-dessus du niveau du liquide (16, 14) dans le volume de retenue (22) et dans la chambre de mesure (8), et

un dispositif de chauffage (12) maintient à température constante le cond it de communication de liquide (6) et la chambre de mesure (8).

2. Dispositif selon la revendication 1, caractérisé en ce que le dispositif de mesure du niveau comprend un détecteur de niveau (24) disposé au-dessus du niveau du liquide (14), lequel fournit un signal sonore et, par la mesure de la durée du parcours du signal sonore réfléchi par le niveau de liquide (14), délivre un signal de sortie représentatif ($V_a$).

3. Dispositif selon la revendication 1 ou 2, caractérisé par un appareil d'évaluation (36) qui les valeurs des mesures de niveau ($V_a$) fournies par le dispositif de mesure du niveau (24) qui dépendent de la température dans l'espace (18) au-dessus du niveau du liquide (14) dans la chambre de mesure (8) et de la température du liquide dans le conduit de communication de liquide (6).

4. Dispositif selon la revendication 3, caractérisé en ce qu'il est prévu un thermomètre à gaz (28) pour mesurer la température dans l'espace au-dessus du niveau du liquide (14) de la chambre de mesure (8), avec le signal de sortie duquel on corrige immédiatement le signal de mesure du niveau en tenant compte de la relation entre la propagation du son et la température du milieu transmettant le son.

5. Dispositif selon la revendication 3 ou 4, caractérisé en ce qu'il est prévu un thermomètre à liquide (32) pour mesurer la température du liquide dans le conduit de communication de liquide (6) placé soit dans ou près de l'ouverture (34) de ce conduit dans la chambre de mesure (8) soit en dessous du niveau du liquide (14) dans le liquide lui-même; et en ce que le signal de sortie ($T_{F1}$) du thermomètre à liquide (32) est amené à un régulateur (40) relié à l'appareil d'évaluation (36) pour influencer le dispositif de chauffage (12).

6. Dispositif selon l'une des revendications 2 à 5, caractérisé en ce que le dispositif d'évaluation (36) comprend un ordinateur (38).